# EUROPEAN PATENT APPLICATION

(11) **EP 1 227 617 A1**
(43) Date of publication of application: **31.07.2002**
(21) Application number: 01440014.7
(22) Date of filing: 25.01.2001
(51) Int. Cl.: H04L 12/24, G06F 9/46

(54) **Processor system, computer program product, and method**

(71) Applicant: ALCATEL, 75008 Paris (FR)
(72) Inventor: de Moerloose, Jan, 9921 Lovendegem (BE); Godon, Marc, 1840 Londerzeel (BE); Overmeire, Luk, 9880 Aalter (BE); Westerhuis, Wietze, 2000 Antwerpen (BE)
(74) Representative: Rausch, Gabriele, Dr.

(57) **Abstract**

Known processor systems, like servers comprising a processor and a memory for storing software components to be run via said processor, which software components like basic infrastructural components and high-level value-added service components can be plugged into a software component framework, are static. By providing said processor system with a monitor for monitoring said software components and with a manager for in dependence of at least one monitoring result adapting at least a part of at least one software component, a use - non-use - overlap - functionality - intensity - popularity - etc. - is monitored and adaptations are managed in dependence of said monitoring, and a processor system has been created which is more evolutionary. Preferably, said monitor and manager are also software components, with said monitor comprising a comparator function, and with said manager managing further software components being downloaded from a storage facility.

## Description

The invention relates to a processor system comprising at least one processor and at least one memory coupled to said processor for storing software components to be run via said processor, which software components are framed by a software component framework.

Such a processor system is known in general, like for example a server, with said software components being for example basic infrastructural components and for example high-level value-added service components, which both can be plugged into the software component framework. This software component framework comprises a collection of rules and interfaces for managing and facilitating interactions between components.

Such a processor system is disadvantageous, inter alia, due to being evolutionary insufficiently.

It is an object of the invention, inter alia, to provide a processor system as described in the preamble, which is more evolutionary.

Thereto, the processor system according to the invention is characterised in that said processor system comprises a monitor for monitoring said software components and comprises a manager for in dependence of at least one monitoring result adapting at least a part of at least one software component.

By introducing the monitor and the manager, for monitoring for example a use - non-use - overlap - functionality - intensity - popularity - etc. - and for managing adaptations in dependence of said monitoring, a processor system has been created which is more evolutionary.

The invention is based on the insight, inter alia, that especially in a framework environment, adaptations should be possible without too many difficulties.

The invention solves the problem, inter alia, of providing a more evolutionary processor system.

A first embodiment of the processor system according to the invention is characterised in that said manager in dependence of a monitoring result couples said processor system to a storage facility comprising at least parts of further software components for said adapting.

By introducing the storage facility (like for example a repository, a (distributed) database, a server (system), one or more memories etc.) comprising the (parts of the) further software components, (parts of) the software components can be replaced by (parts of) the further software components fully automatically.

A second embodiment of the processor system according to the invention is characterised in that said monitor comprises a comparator function for comparing parameters of said software components with further parameters for in dependence of at least one comparison result generating at least one monitoring result.

By introducing the comparator function, said parameters forming part of and/or being linked to (and describing) the software components are used for said monitoring, whereby the further parameters either form part of and/or are linked to other software components and/or are stored in for example said memory (dynamically) or said storage facility (statically) and/or are calculated by the processor for example in dependence of one or more of said parameters, etc.

A third embodiment of the processor system according to the invention is characterised in that at least one of said monitor and manager is a software component.

By implementing the monitor and/or manager via software components, the processor system is extremely flexible.

The invention further relates to a computer program product for use in a processor system comprising at least one processor and at least one memory coupled to said processor for storing software components to be run via said processor, which software components are framed by a software component framework.

The computer program product according to the invention is characterised in that said computer program product comprises a monitor function for monitoring said software components and comprises a manager function for in dependence of at least one monitoring result adapting at least a part of at least one software component.

A first embodiment of the computer program product according to the invention is characterised in that said manager function in dependence of a monitoring result couples said processor system to a storage facility comprising at least parts of further software components for said adapting.

A second embodiment of the computer program product according to the invention is characterised in that said monitor function comprises a comparator function for comparing parameters of said software components with further parameters for in dependence of at least one comparison result generating at least one monitoring result.

The invention yet further relates to a method for use in combination with a processor system comprising at least one processor and at least one memory coupled to said processor for storing software components to be run via said processor, which software components are framed by a software component framework.

The method according to the invention is characterised in that said method comprises a first step of monitoring said software components and a second step of in dependence of at least one monitoring result adapting at least a part of at least one software component.

A first embodiment of the method according to the invention is characterised in that said method comprises a third step of in dependence of a monitoring result coupling said processor system to a storage facility comprising at least parts of further software components for said adapting.

A second embodiment of the method according to the invention is characterised in that said method comprises a fourth step of comparing parameters of said software components with further parameters for in dependence of at least one comparison result generating at least one monitoring result.

US 6,128,611 discloses an Internet-enabled generic application program for accessing hierarchical data. US 5,937,189 discloses an object oriented framework mechanism for determining configuration relations. US 5,915,252 discloses an object oriented framework mechanism for data transfer between a data source and a data target. Neither one of these documents discloses the processor system according to the invention, the computer program product according to the invention or the method according to the invention. All references including references cited with respect to these references are considered to be incorporated in this patent application.

The invention will be further explained at the hand of an embodiment described with respect to drawings, whereby
figure 1 discloses a first embodiment of a processor system according to the invention (in which first embodiment a monitor (function) and a manager (function) are located in a software component framework) for running a computer program product according to the invention,
figure 2 discloses a second embodiment of a processor system according to the invention (in which second embodiment a monitor (function) and a manager (function) are software components of a software component framework) for running a computer program product according to the invention,
figure 3 discloses a flow chart illustrating a method according to the invention and a computer program product according to the invention.

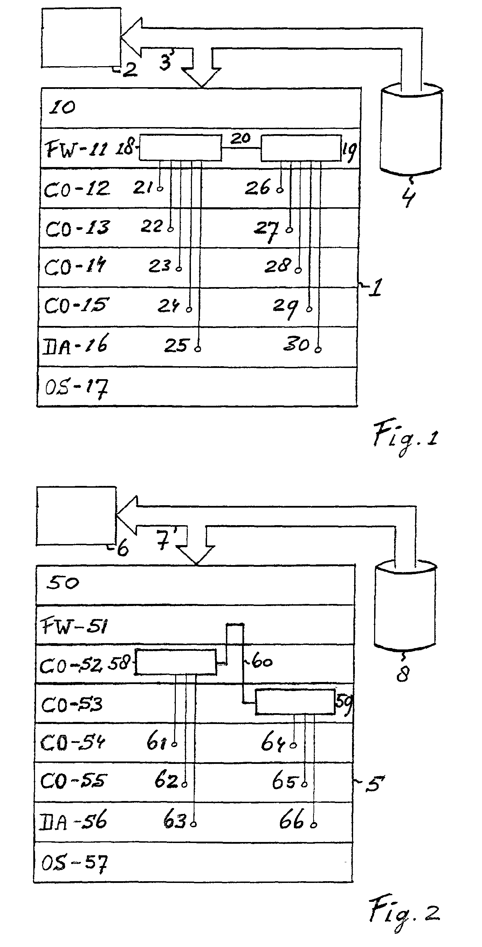

The processor system according to the invention as shown in figure 1 comprises a memory 1 and a processor 2 mutually coupled via a bus 3, which bus 3 is further coupled to a storage facility 4.

Memory 1 comprises parts and fields located at address locations, for example a part 10 located at start-up address locations, a first field 11 (comprising a software framework or FW) located at first address locations, a second field 12 (comprising a first software component or CO) at second address locations, a third field 13 (comprising a second software component or CO) at third address locations, a fourth field 14 (comprising a third software component or CO) at fourth address locations, a fifth field 15 (comprising a fourth software component or CO) at fifth address locations, a sixth field 16 (comprising data information or DA) at sixth address locations, and an seventh field 17 (comprising a software operating system or OS) at seventh address locations.

First field 11 comprises a software monitor 18 and a software manager 19 which are mutually coupled via a link 20. Monitor 18 is linked via a link 21 to second field 12, via a link 22 to third field 13, via a link 23 to fourth field 14, via a link 24 to fifth field 15, and via a link 25 to sixth field 16. Manager 19 is coupled via a link 26 to second field 12, via a link 27 to third field 13, via a link 28 to fourth field 14, via a link 29 to fifth field 15, and via a link 30 to sixth field 16. Of course, each one of said links is just an functional illustration, in practice according to an old-fashioned situation such a link will be for example a "go to" statement for, for example in case of a link to a specific field, going to or visiting one or more of specific address locations at which said specific field is located, according to a more up-to-date situation such a link will be for example a procedure call like an object method invocation or an event notification.

The processor system according to the invention as shown in figure 1 functions as follows. In part 10 for example start-up software has been stored, which start-up software is necessary for starting up the processor system. Thereto, after power has been switched on, processor 2 generates one or more of said start-up address locations, and as a result said start-up software is run via processor 2. Consequently, for example, in response to said start-up software, processor 2 generates one or more of said seventh address locations, as a result of which said software operating system is run via processor 2.

For example via this software operating system, by letting processor 2 generate one or more of said first address locations, said software framework is installed. As a result, said four software components are run (one after the other or (semi)parallel) or are available to be run via processor 2, for example in response to signals arriving at processor 2 and being converted by processor 2 into one or more of said second, third, fourth and/or fifth address locations.

These software components for example correspond with basic services or value added services to be offered to clients, for example clients of a telecommunication provider, in which case said processor system is coupled to and/or forms part of a network computer like a pc, a switch, a router, a brigde, a service gateway etc. (in general: network-unit). Said services are either always available or need to be activated and comprise for example SMS (short message service), on-line banking, billing programs, WAP (Wireless Application Protocol), automatic wake-up service, voice mail, fax etc.

According to the invention each software component for example each one corresponding with one of said services comprises monitoring information for indicating for example a use - non-use - overlap - functionality - intensity - popularity - etc. - of the corresponding software component. Monitor 18 monitors this monitoring information per software component by regularly and/or in response to an order via processor 2 collecting this monitoring information (via links 21-24) and by making calculations in response to this monitoring information and for example data information collected from sixth field 16 (via link 25). The outcome of these calculations is either supplied from monitor 18 to manager 19 or collected by manager 19 from monitor 18 in the form of monitoring results, in response to which manager 19 adapts at least a part of at least one software component (via links 26-29), of course in dependence of said monitoring results (certain results will not lead to adaptations). This adapting may be the adapting of just a parameter forming part of said software component, and/or may be the deactivating and/or the deleting and/or the removing of at least a part of at least one software component and/or may be the replacing of at least a part of at least one software component by a further part of a further software component stored in storage facility 4. Further, manager 19 may adapt the data information stored in said sixth field 16 (via link 30).

Said storage facility (like for example a repository, a (distributed) database, a server (system), one or more memories etc.) is to be taken broadly. So, even an Int(e)r(a)net coupled to one or more servers and to one or more pc's may represent said storage facility, and (smaller or larger) parts of said Int(e)r(a)net coupled to one or more servers and to one or more pc's may represent said storage facility. Further, search programs and/or search machines may be involved when trying to find the right and/or best and/or most interesting and/or most promising storage facility (part).

According to a first alternative to this first embodiment, the collecting of monitoring information via links 21-24 and the adapting via links 26-29 is independent from said monitoring and said adapting. Thereto, storage of said monitoring information and said monitoring results (and said adapting) need to be done in first field 11, for example in/near said monitor 18 and/or said manager 19.

According to a second alternative to this first embodiment, the collecting of data information via link 25 and the adapting via link 30 is independent from said monitoring and said adapting or even not done. Thereto, storage of said data information (and said adapting) need to be done in first field 11, for example in/near said monitor 18 and/or said manager 19.

According to a third alternative to this first embodiment, the collecting of monitoring information via links 21-24 and the adapting via links 26-29 is not done, due to said software components being framed by said software framework, whereby each software component will report itself at said software framework before any action takes place, and whereby said software framework at any time will comprise an overview.

According to a fourth alternative to this first embodiment, parameters are used. For example per software component, several parameters are kept updated, for example a first parameter A indicating a function of said software component (A=F1 for SMS, A=F2 for on-line banking, A=F3 for billing programs, A=F4 for WAP, A=F5 for wake-up service, A=F6 for voice mail, A=F7 for fax etc. whereby one software component may be defined by one or more parameters A), a second parameter B indicating the number of times said software component has been activated, a third parameter C indicating a percentage in time said software component has been activated, a fourth parameter D indicating an age of said software component, etc. The first software component is then defined by the parameters A1, B1, C1, D1, the second software component is then defined by the parameters A2, B2, C2, D2, etc. Preferably, for the description of the parameters of the software components, a standardised format is to be used, like for example XML.

As described before, monitor 18 either collects these parameters or receives these parameters or already comprises these parameters and starts at regular moments and/or in response to a specific order monitoring these parameters, for example via a comparator for comparing these parameters with further parameters which are stored in certain software components or in said storage facility or in said software framework or which are or have been calculated by using said parameters collected/received, etc.

For example, monitor 18 compares parameters A1 =F1 and A2=F2 with further parameters A10(new)=F10(improved F1) and A11 (new=F11 (improved F2). In response a monitoring result is generated indicating that new software components are available (and for example stored in storage facility 4) for replacing both software components stored in memory 1. In dependence of this comparison result, manager 19 may contact storage facility 4 for retrieving this new software component for replacing both old software components.

For example, monitor 18 compares parameters B1=120 and B2=2 and B3=220 with further parameters being B10(threshold-1)=80 and B11(threshold-2)=300. In response a monitoring result is generated indicating that for example the second software component defined by parameter B2 is hardly used and indicating that the first software component defined by B1 and the third software component defined by B3 have been used many times. In dependence of this comparison result, manager 19 may remove this second software component (possibly after confirmation from another entity like processor 2 and/or via processor 2 etc.) or may replace this second software component (possibly after confirmation from another entity like processor 2 and/or via processor 2 etc.) or may send a message to another entity like processor 2 or via processor 2 etc.

For each one of said alternatives to this first embodiment, a user may be informed of one or more or each monitoring action and/or monitoring result, and of one or more or each adaptation, and said user may have the possibility to adjust at least parts of said monitoring actions and/or adaptations etc. Further, a user dynamic behaviour know itself can be introduced for further improving this invention.

The processor system according to the invention as shown in figure 2 comprises a memory 5 and a processor 6 mutually coupled via a bus 7, which bus 7 is further coupled to a storage facility 8.

Memory 5 comprises parts and fields located at address locations, for example a part 50 located at start-up address locations, a first field 51 (comprising a software framework or FW) located at first address locations, a second field 52 (comprising a first software component or CO) at second address locations, a third field 53 (comprising a second software component or CO) at third address locations, a fourth field 54 (comprising a third software component or CO) at fourth address locations, a fifth field 55 (comprising a fourth software component or CO) at fifth address locations, a sixth field 56 (comprising data information or DA) at sixth address locations, and an seventh field 57 (comprising a software operating system or OS) at seventh address locations.

Second field 52 comprises a software monitor 58 and third field 53 comprises a software manager 59 which are mutually coupled via a link 60 flowing via first field 51. Monitor 58 is linked via a link 61 to fourth field 54, via a link 62 to fifth field 55 and via a link 63 to sixth field 56. Manager 59 is coupled via a link 64 to fourth field 54, via a link 65 to fifth field 55 and via a link 66 to sixth field 66. Of course, each one of said links is just an functional illustration, in practice according to an old-fashioned situation such a link will be for example a "go to" statement for, for example in case of a link to a specific field, going to or visiting one or more of specific address locations at which said specific field is located, according to a more up-to-date situation such a link will be for example a procedure call like an object method invocation or an event notification.

The processor system according to the invention as shown in figure 2 functions as follows. In part 50 for example start-up software has been stored, which start-up software is necessary for starting up the processor system. Thereto, after power has been switched on, processor 6 generates one or more of said start-up address locations, and as a result said start-up software is run via processor 6. Consequently, for example, in response to said start-up software, processor 6 generates one or more of said seventh address locations, as a result of which said software operating system is run via processor 6.

For example via this software operating system, by letting processor 6 generate one or more of said first address locations, said software framework is installed. As a result, said four software components are run (one after the other or (semi)parallel) or are available to be run via processor 6, for example in response to signals arriving at processor 6 and being converted by processor 6 into one or more of said second, third, fourth and/or fifth address locations.

These software components for example correspond with basic services or value added services to be offered to clients, for example clients of a telecommunication provider, in which case said processor system is coupled to and/or forms part of a switch, a router, a brigde, a service gateway etc. (in general: network-unit). Said services are either always available or need to be activated and comprise for example SMS (short message service), on-line banking, billing programs, WAP (Wireless Application Protocol), automatic wake-up service, voice mail, fax etc.

According to the invention, the first software component in second field 52 comprises or even corresponds with monitor 58 and the second software component in third field 53 comprises or even corresponds with manager 59. Next software components correspond with one or more of said services and for example comprise monitoring information for indicating for example a use - non-use - overlap - functionality - intensity - popularity - etc. - of the corresponding software component, whereby monitor 58 monitors this monitoring information per software component by regularly and/or in response to an order via processor 6 collecting this monitoring information (via links 61-62) and by making calculations in response to this monitoring information and for example data information collected from sixth field 56 (via link 63). The outcome of these calculations is either supplied from monitor 58 to manager 59 or collected by manager 59 from monitor 58 in the form of monitoring results, in response to which manager 59 adapts at least a part of at least one software component (via links 64-65), of course in dependence of said monitoring results (certain results will not lead to adaptations). This adapting may be the adapting of just a parameter forming part of said software component, and/or may be the deactivating and/or the deleting and/or the removing of at least a part of at least one software component and/or may be the replacing of at least a part of at least one software component by a further part of a further software component stored in storage facility 8. Further, manager 59 may adapt the data information stored in said sixth field 56 (via link 66), etc.

Link 60 of course may flow via first field 51 (corresponding with said software framework being involved in the interaction between monitor 58 and manager 59) or may flow directly from monitor 58 to manager 59 (thereby ignoring any supervision from said software framework).

According to a first, second, third, fourth alternative to this second embodiment, etc. see the alternatives described with respect to the first embodiment.

All embodiments are just embodiments and do not exclude other embodiments not shown and/or described. All alternatives are just alternatives and do not exclude other alternatives not shown and/or described. Each (part of an) embodiment and/or each (part of an) alternative can be combined with any other (part of an) embodiment and/or any other (part of an) alternative. Terms like "in response to K" and "in dependence of L" and "for doing M" do not exclude that there could be a further "in response to N" and a further "in dependence of O" and a further "for doing P" etc. Parts and/or functions of said monitor (function) may be shifted into said manager (function) and vice versa without departing from the scope of this invention.

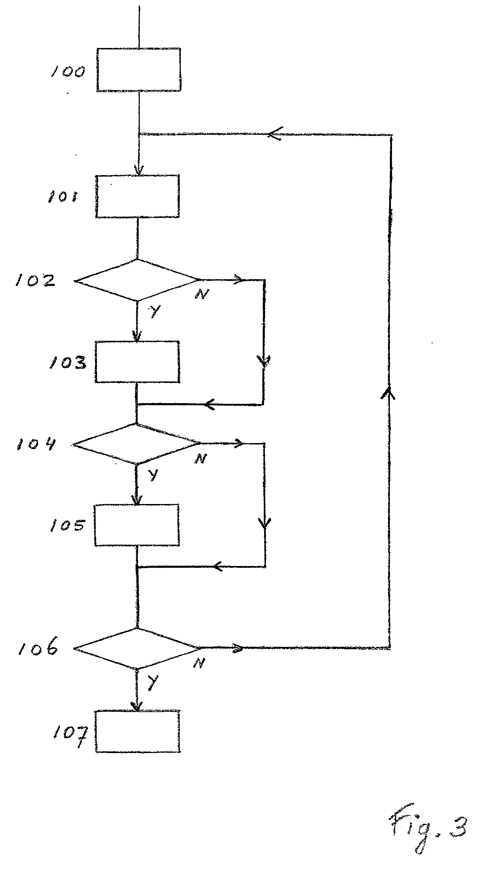

The flow chart as shown in figure 3 comprises the following blocks:
-- 100 -- Index j gets the value 0 (j:=0); goto 101;
-- 101 -- Index j is increased by the value "1" (i:=j+1); goto 102;
-- 102 -- Monitor gets/collects parameter Bᵢ; is Bᵢ smaller than B10(threshold) 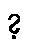 (Bi<B1 1(threshold) 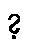 ); if yes goto 103, if no goto 104;
-- 103 -- Store result; goto 104;
-- 104 -- Monitor gets/collects parameter Aj; does parameter A10(new) comprise an improved function compared to parameter Aj 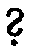 (Aj<A10(new) 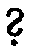 ); If yes goto 105, if no goto 106;
-- 105 -- Store result; goto 106;
-- 106 -- Is index j equal to 9 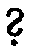 (j=9 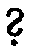 ); if yes goto 107, if no goto 101;
-- 107 -- Analysis of the stored results; in dependence of said analysis, components are replaced or not; end;

The method according to the invention and/or the computer program product according to the invention as illustrated at the hand of the flow chart in figure 3 functions as follows.

Firstly, the method starts (for example every hour or every week or in response to a start signal) allocating the value "0" to index j (block 100). Then the value of index j is increased by the value "1" (block 101). Then parameter Bj is got/collected by said monitor (block 102), and parameter Bj is compared with a threshold parameter B10(threshold) (block 102). In case of parameter Bj being smaller than said threshold (indicating that parameter Bj is not used that often), a result is stored (indicating that there is an inefficiency) (block 103). Then parameter Aj is got/collected by said monitor (block 104), and parameter Aj is compared with parameter A10(new) indicating that there is a new component 10 having an improved function (block 104). In case of parameter A10 comprising an improved function compared to parameter Aj, a result is stored (indicating that there is an inefficiency) (block 105). Then index j is compared with the value "9" (block 106), if index i has reached the value "9", an analysis of the stored results is made, and in dependence of said analysis, components can be replaced or not; the method is finished (block 107), if index j has not reached the value "9", the value of index j is increased by the value "1" (block 101) etc. In case of parameter Bj being equal to or larger than said threshold (indicating that parameter Bj is used often), and/or in case of parameter A10 not comprising an improved function compared to parameter Aj, no results are stored (or different results are stored automatically) etc.until finally the method is finished (block 107).

In block 102, where Bj is compared with B11 (threshold), instead of comparing Bj with one threshold, according to an alternative Bj is compared with several thresholds, and/or with one or more thresholds depending upon index j. And in block 104, where Aj is compared with A10(new), instead of comparing Aj with one threshold, according to an alternative Aj is compared with several thresholds, and/or with one or more thresholds depending upon index j. Instead and/or in addition to said comparisons, further comparisons are possible, alternative and/or further loops are possible, alternative and/or further block-connections are possible, alternative and/or further values are possible etc. Said index j is just an example, said parameters A and B are just examples.

The software component framework comprises a collection of rules and interfaces for managing and facilitating interactions between components. Thereby, an abstract component, corresponding with for example an abstract class or an interface or a combination of both, is defined as a starting point. An abstract class for example concerns basic logic for each component (which basic logic allows said component to fit into the framework, like for example defining interactions with said monitor and manager). An interface for example concerns minimal functionality. These abstract classes and/or interfaces constitute a basic structure for all possible used components, like for example basic infrastructural components and for example high-level value-added service components, which both can be plugged into the software component framework. If a component is plugged into the framework, there must be one or more conformations to abstract classes and/or interfaces. When (certain functionality of) a certain component is called, the framework, knowing every component via a naming service, performs all necessary actions (like for example logging) before any action (like for example said functionality) takes place. In JAVA, a component is for example represented by a JAR file, a kind of a ZIP compression. When the framework detects a particular component to be replaced, the JAR file of the new component replaces the JAR file of the old one, which JAR file belonging to the new component can be found via said naming service.

In view of figures 1, 2 and/or 3, many other embodiments will be possible without departing from the scope of protection defined and/or conferred.

## Claims

1. Processor system comprising at least one processor and at least one memory coupled to said processor for storing software components to be run via said processor, which software components are framed by a software component framework, **characterised in that** said processor system comprises a monitor for monitoring said software components and comprises a manager for in dependence of at least one monitoring result adapting at least a part of at least one software component.

2. Processor system according to claim 1, **characterised in that** said manager in dependence of a monitoring result couples said processor system to a storage facility comprising at least parts of further software components for said adapting.

3. Processor system according to claim 1 or 2, **characterised in that** said monitor comprises a comparator function for comparing parameters of said software components with further parameters for in dependence of at least one comparison result generating at least one monitoring result.

4. Processor system according to claim 1, 2 or 3, **characterised in that** at least one of said monitor and manager is a software component.

5. Computer program product for use in a processor system comprising at least one processor and at least one memory coupled to said processor for storing software components to be run via said processor, which software components are framed by a software component framework, **characterised in that** said computer program product comprises a monitor function for monitoring said software components and comprises a manager function for in dependence of at least one monitoring result adapting at least a part of at least one software component.

6. Computer program product according to claim 5, **characterised in that** said manager function in dependence of a monitoring result couples said processor system to a storage facility comprising at least parts of further software components for said adapting.

7. Computer program product according to claim 5 or 6, **characterised in that** said monitor function comprises a comparator function for comparing parameters of said software components with further parameters for in dependence of at least one comparison result generating at least one monitoring result.

8. Method for use in combination with a processor system comprising at least one processor and at least one memory coupled to said processor for storing software components to be run via said processor, which software components are framed by a software component framework, **characterised in that** said method comprises a first step of monitoring said software components and a second step of in dependence of at least one monitoring result adapting at least a part of at least one software component.

9. Method according to claim 8, **characterised in that** said method comprises a third step of in dependence of a monitoring result coupling said processor system to a storage facility comprising at least parts of further software components for said adapting.

10. Method according to claim 9, **characterised in that** said method comprises a fourth step of comparing parameters of said software components with further parameters for in dependence of at least one comparison result generating at least one monitoring result.
